# EUROPEAN PATENT APPLICATION

(11) **EP 4 027 533 A1**
(43) Date of publication of application: **13.07.2022**
(21) Application number: 21151122.5
(22) Date of filing: 12.01.2021
(51) Int. Cl.: H04B 7/06

(54) **ADAPTATION OF OPERATING PARAMETERS OF A BEAMFORMING BASE STATION**

(71) Applicant: VOLKSWAGEN AG, 38440 Wolfsburg (DE)
(72) Inventor: Pfadler, Andreas, 13357 Berlin (DE)

(57) **Abstract**

The present invention is related to a method, a computer program, and an apparatus for providing a beam reception feedback signal to a beamforming base station, as well as to a vehicle, which makes use of such a method or apparatus. The invention is further related to a method, a computer program, and an apparatus for adapting operating parameters of a beamforming base station, as well as to a beamforming base station, which makes use of such a method or apparatus. In a first step, a received power of beam reception is determined (10) for at least a first position and a second position of a receiver. Furthermore, a gradient of the received power of beam reception is determined (11). The determined gradient is provided (12) as a feedback signal to the beamforming base station. The beamforming base station receives (13) this feedback signal from the receiver and determines (14) a position of the receiver relative to the beam from the gradient. The beamforming base station then adapts (15) at least one operating parameter based on the position of the receiver.

## Description

The present invention is related to a method, a computer program, and an apparatus for providing a beam reception feedback signal to a beamforming base station, as well as to a vehicle, which makes use of such a method or apparatus. The invention is further related to a method, a computer program, and an apparatus for adapting operating parameters of a beamforming base station, as well as to a beamforming base station, which makes use of such a method or apparatus.

Autonomous driving, also referred to as automatic driving, automated driving, or piloted driving, is the movement of vehicles, mobile robots and driverless transport systems that are largely autonomous. There are different degrees of autonomous driving. In Europe, various transport ministries, for example the Federal Institute for Road Systems (Bundesanstalt für Straßenwesen) in Germany, have defined the following autonomous stages:
- Level 0: "Driver only", the driver drives himself, steers, accelerates, brakes, etc.
- Level 1: Certain assistance systems help with vehicle operation, including a cruise control system such as ACC (Automatic Cruise Control).
- Level 2: Partial automation. Therein, automatic parking, tracking function, general longitudinal guidance, acceleration, deceleration, etc. are taken over by the assistance systems, including collision avoidance.
- Level 3: High automation. The driver does not have to monitor the system continuously. The vehicle independently performs functions such as the triggering of the turn signal, lane change and tracking. The driver can turn to other things, but if requested, the driver has to take over control within a pre-warning period.
- Level 4: Full automation. The guidance of the vehicle is permanently performed by the system. If the system is no longer able to handle the tasks, the driver can be asked to take over control.
- Level 5: No driver required. Apart from setting the target and starting the system, no human intervention is required.

A slightly different definition of levels is known from the Society of Automotive Engineers (SAE). In this regard, reference is made to the SAE J3016 standard. Such definitions could also be used instead of the above given definition.

Automotive and telecommunications industries have joined efforts on vehicle communications over the last decade. Indeed, there is an increasing interest of users and manufacturers in connecting vehicles to high-speed networks, aiming to provide multimedia services and driving assistance. To respond to these demands with limited spectrum availability, multiple input multiple output (MIMO) in general, and massive MIMO (mMIMO) in particular, may introduce significant improvements. The throughput of the system can be significantly enhanced and multi-user interference reduced. Given their higher directivity, massive architectures are worthwhile if the user location is known and the update of the steered beam is fast enough. The accuracy of the user positioning varies and strongly depends on the condition of the communication link such as line-of-sight or non-line-of-sight conditions.

In this regard, DE 197 37 136 C2 discloses a directivity control antenna apparatus for use in base stations and mobile stations of a mobile communication system. Each base station includes incoming direction estimation means for estimating the incoming direction of radio waves that are received from a mobile station, to thereby estimate the direction of the mobile station with respect to the antenna of the base station. Based on the results of such estimation, the radiation pattern of the antenna of the base station is formed with a directivity peak that is oriented in the direction of that mobile station by antenna directivity control means.

One issue to be addressed when beamforming technologies are used is positioning of the vehicle, or more generally the user equipment, in the coverage area of the beam footprint. This is especially crucial at the edge of the coverage area, where the received power decreases the faster, the more directive the antenna is. In addition, position inaccuracies of the user make it challenging for the base station to switch the beam at an appropriate rate.

It is an object of the present invention to provide improved solutions for adaptation of operating parameters of a beamforming base station.

The invention is defined by the appended independent claims. The dependent claims include advantageous further developments and improvements of the present principles as described below.

According to a first aspect, a method for providing a beam reception feedback signal to a beamforming base station comprises the steps of:
- determining a received power of beam reception for at least a first position and a second position of a receiver;
- determining a gradient of the received power of beam reception; and
- providing the determined gradient as a feedback signal to the beamforming base station.

Accordingly, a computer program comprises instructions, which, when executed by at least one processor, cause the at least one processor to perform the following steps for providing a beam reception feedback signal to a beamforming base station:
- determining a received power of beam reception for at least a first position and a second position of a receiver;
- determining a gradient of the received power of beam reception; and
- providing the determined gradient as a feedback signal to the beamforming base station.

The term computer has to be understood broadly. In particular, it also includes electronic control units, embedded devices and other processor-based data processing devices.

The computer program code can, for example, be made available for electronic retrieval or stored on a computer-readable storage medium.

According to another aspect, an apparatus for providing a beam reception feedback signal to a beamforming base station comprises:
- a processing module configured to determine a received power of beam reception for at least a first position and a second position of a receiver and to determine a gradient of the received power of beam reception; and
- an output module configured to provide the determined gradient as a feedback signal to the beamforming base station.

According to the invention, the receiver does not or at least not only provide a pilot signal, which allows the base station to identify and spatially locate the receiver, but provides information about a gradient of the received power of beam reception. This gradient can then be evaluated by the base station to adapt its operating parameters accordingly. In this way, the receiver supports the beam switching or steering of the base station, which in turn leads to an improved connection between the receiver and the base station. The receiver may be, for example, comprised in a vehicle or in a mobile user device.

In an advantageous embodiment, the received power for a position of the receiver is determined as a moving average. This allows dealing with small-scale fading, i.e. with the rapid changes of the amplitude and phase of the signal over a short period of time or very short distances.

In an advantageous embodiment, the receiver is configured to use MIMO or massive-MIMO technology. These technologies are well suited to respond to the increasing demands for connecting vehicles to high-speed networks with limited spectrum availability. The data throughput of the system can be significantly enhanced, and multi-user interference reduced.

Advantageously, a vehicle comprises an apparatus according to the invention or is configured to perform a method according to the invention for providing a beam reception feedback signal to a beamforming base station. In this way, the vehicle is able to support the beam switching or steering of the base station, which in turn leads to an improved connection between the vehicle and the base station. The vehicle may be any type of vehicle, e.g. a car, a bus, a motorcycle, a commercial vehicle, in particular a truck, an agricultural machinery, a construction machinery, a rail vehicle, etc. More generally, the invention can be used in land vehicles, rail vehicles, watercrafts, and aircrafts. This expressively includes robots and drones. Of course, use of the invention is not limited to vehicles. Also a mobile user device may comprise an apparatus according to the invention or be configured to perform a method according to the invention for providing a beam reception feedback signal to a beamforming base station.

According to a further aspect, a method for adapting operating parameters of a beamforming base station comprises the steps of:
- receiving a feedback signal comprising a gradient of a received power of beam reception from a receiver;
- determining a position of the receiver relative to the beam from the gradient; and
- adapting at least one operating parameter of the beamforming base station based on the position of the receiver.

Accordingly, a computer program comprises instructions, which, when executed by at least one processor, cause the at least one processor to perform the following steps for adapting operating parameters of a beamforming base station:
- determining a received power of beam reception for at least a first position and a second position of a receiver;
- determining a gradient of the received power of beam reception; and
- providing the determined gradient as a feedback signal to the beamforming base station.

The term computer has to be understood broadly. In particular, it also includes workstations, embedded devices and other processor-based data processing devices.

The computer program code can, for example, be made available for electronic retrieval or stored on a computer-readable storage medium.

According to another aspect, an apparatus for adapting operating parameters of a beamforming base station comprises:
- a receiving module configured to receive a feedback signal comprising a gradient of a received power of beam reception from a receiver; and
- a processing module configured to determine a position of the receiver relative to the beam from the gradient and to adapt at least one operating parameter of the beamforming base station based on the position of the receiver.

According to the invention, the base station does not or at least not only receive a pilot signal from the receiver, which allows the base station to identify and spatially locate the receiver, but also information about a gradient of the received power of beam reception. This gradient can then be evaluated by the base station to adapt its operating parameters accordingly. In particular, the base station is able to estimate the current position and to predict the future position of the receiver from the received gradient. This allows optimizing the beam width, i.e. the footprint of the antenna, and the beam switching, i.e. the tracking of the receiver, depending on the position and the movement speed and direction of the receiver in the antenna footprint of the base station. This in turn leads to an improved connection between the receiver and the base station.

In an advantageous embodiment, the at least one operating parameter is a beam update rate or a beam steering parameter. By adapting those parameters, the base station is able to adapt its focusing behavior depending on the slope and the trend of the received power gradient, i.e. depending on whether how fast the received power increases or decreases.

In an advantageous embodiment, the beam update rate is increased when the gradient indicates a decrease of the received power. In the case of a decreasing received power, it can be expected that an update is needed soon. Therefore, it is helpful to increase the beam update rate to ensure a timely steering or switching of the beam.

In an advantageous embodiment, the beamforming base station is configured to use MIMO or massive-MIMO technology. These technologies are well suited to respond to the increasing demands for connecting vehicles to high-speed networks with limited spectrum availability. The data throughput of the system can be significantly enhanced, and multi-user interference reduced.

In an advantageous embodiment, the beamforming base station has access to map data or information on streets or buildings in a coverage area of the beamforming base station. Through the use of accurate maps or information on streets, etc., the beamforming base station is able to better predict the movement of the receiver and to determine a suitable adaption of the operating parameters.

Further features of the present invention will become apparent from the following description and the appended claims in conjunction with the figures.
- Fig. 1: schematically illustrates a method for providing a beam reception feedback signal to a beamforming base station and for adapting operating parameters of the beamforming base station;
- Fig. 2: schematically illustrates a first embodiment of an apparatus for providing a beam reception feedback signal to a beamforming base station;
- Fig. 3: schematically illustrates a second embodiment of an apparatus for providing a beam reception feedback signal to a beamforming base station;
- Fig. 4: schematically illustrates a first embodiment of an apparatus for adapting operating parameters of a beamforming base station;
- Fig. 5: schematically illustrates a second embodiment of an apparatus for adapting operating parameters of a beamforming base station;
- Fig. 6: shows a block diagram of an electronics system of a vehicle;
- Fig. 7: illustrates a basic architecture of a vehicle-to-vehicle and vehicle-to-infrastructure communication system;
- Fig. 8: shows a generic scenario for vehicle-to-infrastructure communication;
- Fig. 9: illustrates a base station footprint in an urban scenario at 26 GHz;
- Fig. 10: illustrates a base station footprint in an urban scenario at 3.6 GHz; and
- Fig. 11: shows a received power along a trajectory for 3.6 GHz and 26 GHz.

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a combination of circuit elements that performs that function or software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

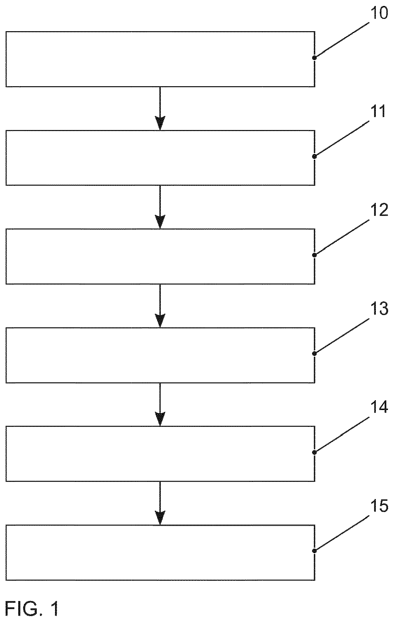

Fig. 1 schematically illustrates a method for providing a beam reception feedback signal to a beamforming base station and for adapting operating parameters of the beamforming base station. In a first step, a received power of beam reception is determined 10 for at least a first position and a second position of a receiver. For example, the received power for a position may be determined 10 as a moving average. Furthermore, a gradient of the received power of beam reception is determined 11. The determined gradient is provided 12 as a feedback signal to the beamforming base station. The beamforming base station receives 13 this feedback signal from the receiver and determines 14 a position of the receiver relative to the beam from the gradient. The beamforming base station then adapts 15 at least one operating parameter based on the position of the receiver, e.g. a beam update rate or a beam steering parameter. For example, the beam update rate may be increased when the gradient indicates a decrease of the received power. Advantageously, the beamforming base station and the receiver use MIMO or massive-MIMO technology.

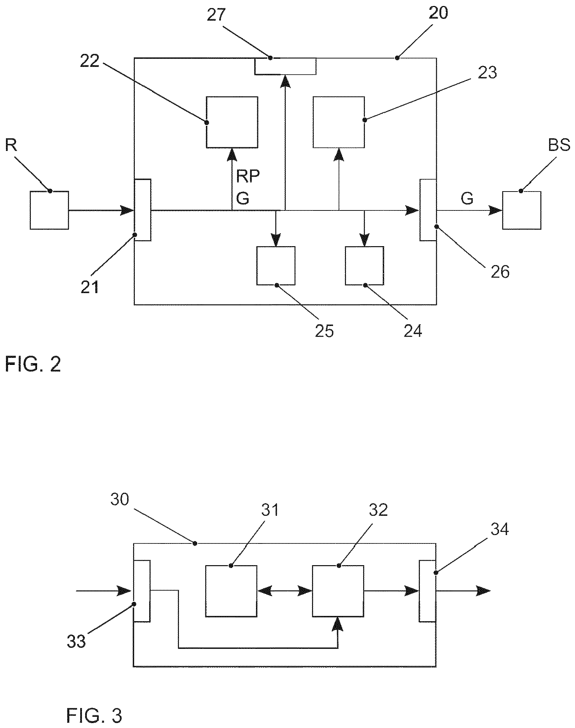

Fig. 2 schematically illustrates a block diagram of a first embodiment of an apparatus 20 according to the invention for providing a beam reception feedback signal to a beamforming base station BS. The apparatus 20 has an input 21 for receiving data, e.g. data from a receiver R about beam reception from a base station BS. A processing module 22 is configured to determine a received power RP of beam reception for at least a first position and a second position of a receiver and to determine a gradient G of the received power RP of beam reception. For example, the processing module 22 may determine the received power for a position as a moving average. An output module 23 is configured to provide the determined gradient G as a feedback signal to the beamforming base station BS. The feedback signal may be provided to the base station BS via an output 26. A local storage unit 25 is provided, e.g. for storing data during processing. The output 26 may also be combined with the input 21 into a single bidirectional interface. Advantageously, the beamforming base station BS and the receiver R use MIMO or massive-MIMO technology.

The processing module 22 and the output module 23 may be controlled by a controller 24. A user interface 27 may be provided for enabling a user to modify settings of the processing module 22, the output module 23, or the controller 24. The processing module 22, the output module 23, and the controller 24 can be embodied as dedicated hardware units. Of course, they may likewise be fully or partially combined into a single unit or implemented as software running on a processor, e.g. a CPU or a GPU.

A block diagram of a second embodiment of an apparatus 30 according to the invention for providing a beam reception feedback signal to a beamforming base station is illustrated in Fig. 3. The apparatus 30 comprises a processing device 31 and a memory device 32. For example, the apparatus 30 may be a computer, an electronic control unit or an embedded system. The memory device 32 has stored instructions that, when executed by the processing device 31, cause the apparatus 30 to perform steps according to one of the described methods. The instructions stored in the memory device 32 thus tangibly embody a program of instructions executable by the processing device 31 to perform program steps as described herein according to the present principles. The apparatus 30 has an input 33 for receiving data. Data generated by the processing device 31 are made available via an output 34. In addition, such data may be stored in the memory device 32. The input 33 and the output 34 may be combined into a single bidirectional interface.

The processing device 31 as used herein may include one or more processing units, such as microprocessors, digital signal processors, or a combination thereof.

The local storage unit 25 and the memory device 32 may include volatile and/or non-volatile memory regions and storage devices such as hard disk drives, optical drives, and/or solid-state memories.

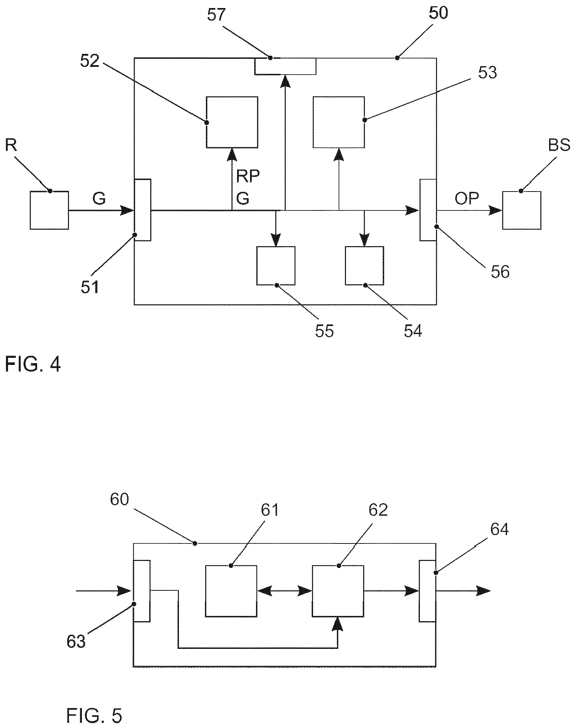

Fig. 4 schematically illustrates a block diagram of a first embodiment of an apparatus 50 according to the invention for adapting operating parameters OP of a beamforming base station BS. The apparatus 50 has an input 51, via which a receiving module 52 receives a feedback signal comprising a gradient G of a received power of beam reception from a receiver R. A processing module 53 is configured to determine a position of the receiver R relative to the beam from the gradient G and to adapt at least one operating parameter OP of the beamforming base station BS based on the position of the receiver R. The adapted operating parameters OP, e.g. a beam update rate or a beam steering parameter, may be provided to the base station BS via an output 56. For example, the beam update rate may be increased when the gradient indicates a decrease of the received power. A local storage unit 55 is provided, e.g. for storing data during processing. The output 56 may also be combined with the input 51 into a single bidirectional interface. Advantageously, the beamforming base station BS uses MIMO or massive-MIMO technology.

The receiving module 52 and the processing module 53 may be controlled by a controller 54. A user interface 57 may be provided for enabling a user to modify settings of the receiving module 52, the processing module 53, or the controller 54. The receiving module 52, the processing module 53, and the controller 54 can be embodied as dedicated hardware units. Of course, they may likewise be fully or partially combined into a single unit or implemented as software running on a processor, e.g. a CPU or a GPU.

A block diagram of a second embodiment of an apparatus 60 according to the invention for adapting operating parameters of a beamforming base station is illustrated in Fig. 5. The apparatus 60 comprises a processing device 61 and a memory device 62. For example, the apparatus 60 may be a computer, a workstation or an embedded system. The memory device 62 has stored instructions that, when executed by the processing device 61, cause the apparatus 60 to perform steps according to one of the described methods. The instructions stored in the memory device 62 thus tangibly embody a program of instructions executable by the processing device 61 to perform program steps as described herein according to the present principles. The apparatus 60 has an input 63 for receiving data. Data generated by the processing device 61 are made available via an output 64. In addition, such data may be stored in the memory device 62. The input 63 and the output 64 may be combined into a single bidirectional interface.

The processing device 61 as used herein may include one or more processing units, such as microprocessors, digital signal processors, or a combination thereof.

The local storage unit 55 and the memory device 62 may include volatile and/or non-volatile memory regions and storage devices such as hard disk drives, optical drives, and/or solid-state memories.

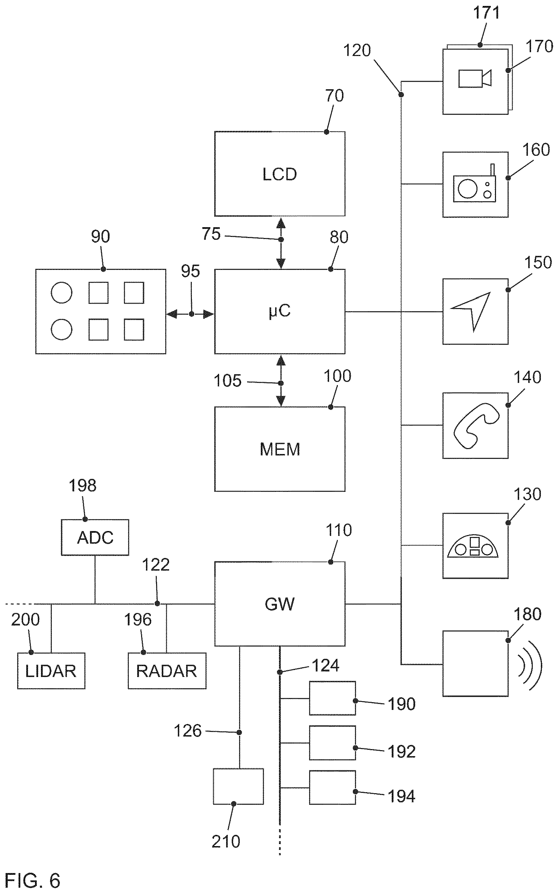

In the following, a preferred embodiment of the invention shall be explained in more detail with reference to Fig. 6 to Fig. 11.

Fig. 6 schematically shows a block diagram of a board electronics system of a vehicle. Part of the board electronics system is an infotainment system, which comprises a touch-sensitive display unit 70, a computing unit 80, an input unit 90, and a memory unit 100. The display unit 70 is connected to the computing unit 80 via a data line 75 and includes both a display area for displaying variable graphical information and an operator interface (touch-sensitive layer) arranged above the display area for inputting commands by a user. The input unit 90 is connected to the computing unit 80 via a data line 95.

The memory unit 100 is connected to the computing unit 80 via a data line 105. In the memory unit 100, a pictogram directory and/or symbol directory may be deposited with pictograms and/or symbols for possible overlays of additional information.

The other parts of the infotainment system, such as a camera 170, radio 160, navigation device 150, telephone 140 and instrument cluster 130 are connected via a data bus 120 with the computing device 80. As data bus 120, the high-speed variant of the CAN (Controller Area Network) bus according to ISO standard 11898-2 may be used. Alternatively, an Ethernet-based bus system such as IEEE 802.03cg can be used. Bus systems implementing the data transmission via optical fibers are also usable. Examples are the MOST Bus (Media Oriented System Transport) or the D2B Bus (Domestic Digital Bus). For inbound and outbound wireless communication, the vehicle is equipped with an on-board connectivity module 180. It can be used for mobile communication, e.g. mobile communication according to the 5G standard.

Reference numeral 190 denotes an engine control unit. Reference numeral 192 denotes an ESC (electronic stability control) unit, whereas reference numeral 194 denotes a transmission control unit. The networking of such control units, all of which are allocated to the category of the drive train, typically occurs with a CAN bus 124. Since various sensors are installed in the motor vehicle and these are no longer only connected to individual control units, such sensor data are also distributed via the bus system 124 to the individual control devices.

Modern vehicles may comprise additional components, such as further sensors for scanning the surroundings, like a LIDAR sensor 200 or a RADAR sensor 196 and additional video cameras 171, e.g. a front camera, a rear camera or side cameras. Such sensors are increasingly used in vehicles for observation of the environment. Further control devices, such as an ADC (automatic driving control) unit 198, etc., may be provided in the vehicle. The RADAR and LIDAR sensors 196, 200 may have a scanning range of up to 250 m, whereas the cameras 170, 171 may cover a range from 30 m to 120 m. The components 196 to 200 are connected to another communication bus 122, e.g. an Ethernet-Bus due to its higher bandwidth for data transport. One Ethernet-bus adapted to the special needs of car communication is standardized in the IEEE 802.1Q specification. Moreover, a lot of information about the environment may be received via V2V communication from other vehicles. Particularly for those vehicles that are not in line of sight to the observing vehicle, it is very advantageous to receive the information about their position and motion via V2V communication.

Reference numeral 210 denotes an on-board diagnosis interface, which is connected to another communication bus 126.

For the purpose of transmitting the vehicle-relevant sensor data via the an on-board connectivity module 180 to another vehicle or to a base station, a gateway 110 is provided. This gateway 110 is connected to the different bus systems 120, 122, 124 and 126. The gateway 110 is adapted to convert the data it receives via one bus to the transmission format of another bus so that it can be distributed using the packets specified for the respective other bus. For forwarding this data to the outside, i.e. to another vehicle or to the base station, the on-board connectivity module 180 is equipped with a communication interface to receive these data packets and, in turn, to convert them into the transmission format of the appropriate mobile radio standard.

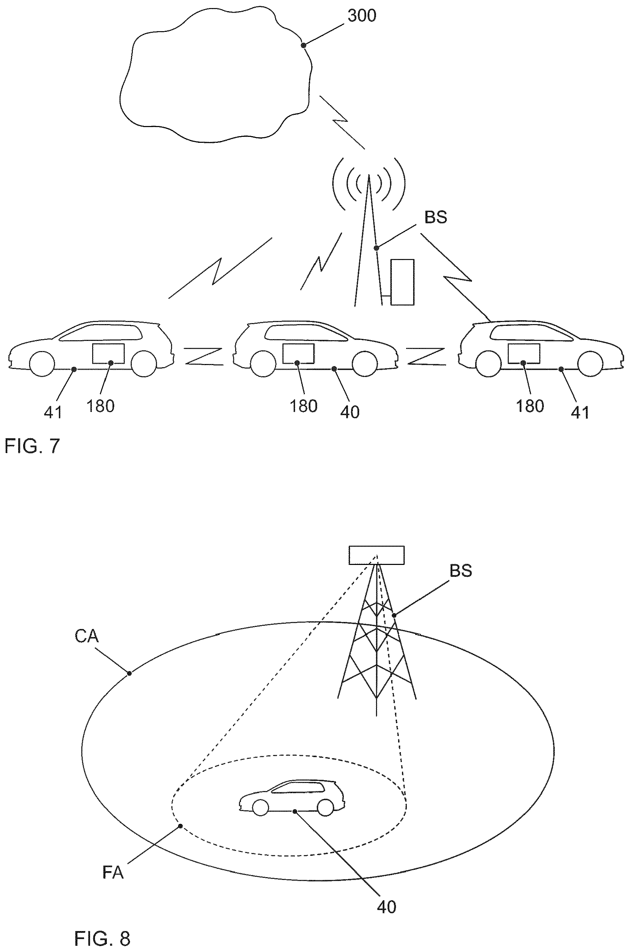

Fig. 7 illustrates a basic architecture of a V2V (vehicle-to-vehicle) and V2I (vehicle-to-infrastructure) communication system. Reference numeral 40 denotes a vehicle, which in this example is a car, in particular a passenger car. The vehicle 40 is equipped with an on-board connectivity module 180 including a corresponding antenna such that the vehicle 40 can participate in any form of mobile communication service. As shown in Fig. 7, the vehicle 40 may transmit and receive signals to and from a base station BS of a mobile communication service provider using a V2I communication link. The base station BS is connected to a network 300.

The base station BS in Fig. 7 is positioned close to a road, on which the vehicle 40 is driving. Of course, other vehicles 41 may also drive on the road.

The vehicles 40, 41 may also be equipped with means for observing their surroundings. Their sensor systems, which are used to capture the environmental objects, are based on different measuring methods, depending on the application. Widespread technologies are, among others, RADAR, LIDAR, cameras for 2D and 3D image acquisition, and ultrasonic sensors.

Since automated driving is on the rise, a lot more data needs to be exchanged among the vehicles 40, 41, and also between the vehicles 40, 41 and the network 300. The communication systems for V2V and V2I communication need to be adapted correspondingly. For this purpose, the base station BS may make use of MIMO or massive-MIMO technology.

Fig. 8 shows a generic scenario for vehicle-to-infrastructure communication. The vehicle 40 sends a pilot signal, which allows the base station BS to identify and spatially locate the vehicle 40. With this information, the base station BS radiates into its coverage area CA with a focusing strategy depending on the specific antenna configuration, to create a focusing area FA encompassing the vehicle 40. Due to the distribution of the radiated field of the base station BS, some other regions may be reached by the signal. Other users might perceive this as an interference, degrading the performance of their communication channel. In general, massive architectures intend to reduce this effect and improve the overall performance of the network. Additionally, the subdivision of the massive geometry allows to concentrate power in different regions corresponding to several users or to apply conventional MIMO strategies for capacity enhancement.

Regulation entities have allocated parts of the spectrum to support the development of new technologies and standards. The 3.4-3.8 GHz band has been chosen by the mobile industry in many countries to roll out the fifth generation of mobile communications (5G) in the sub-6 GHz region. These frequencies have also been proposed for vehicle-to-vehicle communication. On the other hand, one of the greatest revolutions in 5G networks is the use of mmWave frequencies. Some candidate bands have already been defined and the national regulatory bodies have chosen a preliminary allocation. The most promising band, especially in Europe, is found at 24.25-27.5 GHz.

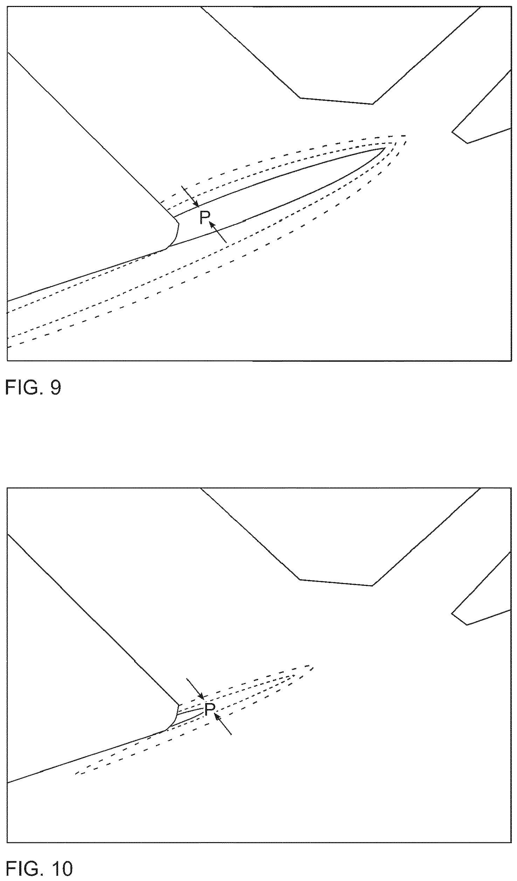

Fig. 9 illustrates a base station footprint in an urban scenario at 26 GHz. Shown is the horizontal power distribution of a massive-MIMO base station operating at 26 GHz and focusing towards one focusing point P. At this focusing point P, the user is expected to be located. Fig. 10 illustrates a base station footprint in an urban scenario at 3.6 GHz. As before, shown is the horizontal power distribution of a massive-MIMO base station operating at 3.6 GHz and focusing towards one focusing point P. As can be seen, for a given antenna physical size the focusing capabilities are tightly related to the operating frequency, which also affects the scattering effects.

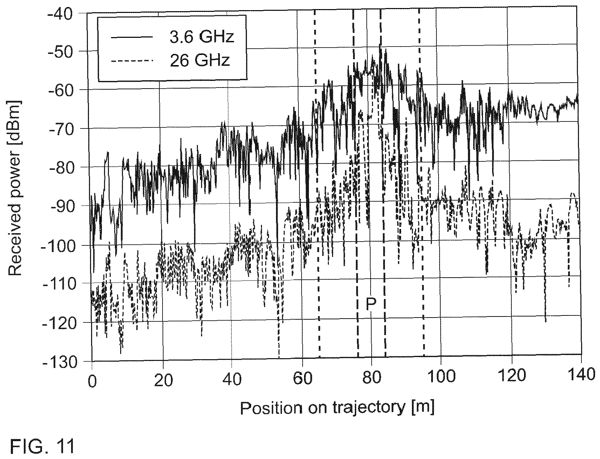

Fig. 11 shows a received power along an exemplary trajectory for 3.6 GHz and 26 GHz when the beam is focused towards the focusing point P. In this case, the base station uses all the antennas as an array, i.e. MIMO is not used. The focusing capability is higher for the mmWave frequency due to the larger number of elements, but the final performance (capacity) also depends on the scattering properties of the environment. The focusing area for the focusing point P is indicated by the short-dashed lines for the 3.6 GHz geometry and by the long-dashed lines for the 26 GHz geometry. As can be seen, the base station perfectly concentrates the power around the focusing point P for the two frequencies. The main difference between 3.6 GHz and 26 GHz is the width of the focusing area and the depth of the fast fading notches. It implies that a faster beam switching is required for the higher frequency.

If the user is in the center of the beam, its connecting conditions will change slowly as it moves, i.e. the derivative of the change will be small because the user is in the flat zone of the beam. However, when the user moves towards the edges of the beam, those changes will be faster. Accordingly, the absolute value of the derivative of the change will be larger. In this case, the base station needs to change faster. In other words, the speed of the loop of control, i.e. positioning of the user and beam update, may be adjusted based on the position of the vehicle with respect to the beam footprint. To this end, the gradient of the received power may be evaluated. The receiver calculates a gradient of the received power and provides this information as feedback to the base station. The base station is then able to locate the user in the antenna footprint and to predict the future position of the user from the received gradient. The base station can then change its beam update rate and its focusing behavior accordingly depending on the position and the movement speed and direction of the user. Advantageously, the base station has access to map data or information on streets or buildings in a coverage area of the base station. Through the use of accurate maps or information on streets, etc., the base station is able to better predict the movement of the user and to determine a suitable adaption of the operating parameters.

### Reference numerals

- 10: Determine received power of beam reception
- 11: Determine gradient of received power
- 12: Provide gradient to beamforming base station
- 13: Receive gradient from receiver
- 14: Determine position of receiver relative to beam
- 15: Adapt operating parameters based on position
- 20: Apparatus
- 21: Input
- 22: Processing module
- 23: Output module
- 24: Controller
- 25: Local storage unit
- 26: Output
- 27: User interface
- 30: Apparatus
- 31: Processing device
- 32: Memory device
- 33: Input
- 34: Output
- 40: Vehicle
- 41: Other vehicle
- 50: Apparatus
- 51: Input
- 52: Receiving module
- 53: Processing module
- 54: Controller
- 55: Local storage unit
- 56: Output
- 57: User interface
- 60: Apparatus
- 61: Processing device
- 62: Memory device
- 63: Input
- 64: Output
- 70: Display Unit
- 75: Data line to display unit
- 80: Computing unit
- 90: Input unit
- 95: Data line to input unit
- 100: Memory unit
- 105: Data line to memory unit
- 110: Gateway
- 120: First data bus
- 122: Second data bus
- 124: Third data bus
- 126: Fourth data bus
- 130: Instrument cluster
- 140: Telephone
- 150: Navigation device
- 160: Radio
- 170: Camera
- 171: Further cameras
- 180: On-board connectivity module
- 190: Engine control unit
- 192: Electronic stability control unit
- 194: Transmission control unit
- 196: RADAR sensor
- 198: Automatic driving control unit
- 200: LIDAR sensor
- 210: On-board diagnosis interface
- 300: Network
- BS: Base station
- CA: Coverage area
- FA: Focusing area
- G: Gradient
- OP: Operating parameter
- P: Focusing point
- R: Receiver
- RP: Received power

## Claims

1. A method for providing a beam reception feedback signal to a beamforming base station (BS), the method comprising:
- determining (10) a received power (RP) of beam reception for at least a first position and a second position of a receiver (R);
- determining (11) a gradient (G) of the received power (RP) of beam reception; and
- providing (12) the determined gradient (G) as a feedback signal to the beamforming base station (BS).

2. The method according to claim 1, wherein the received power (RP) for a position of the receiver is determined (10) as a moving average.

3. The method according to claim 1 or 2, wherein the receiver (R) is configured to use MIMO or massive-MIMO technology.

4. A computer program comprising instructions, which, when executed by a computer, cause the computer to perform a method according to any of claims 1 to 3 for providing a beam reception feedback signal to a beamforming base station (BS).

5. An apparatus (20) for providing a beam reception feedback signal to a beamforming base station (BS), the apparatus (20) comprising:
- a processing module (22) configured to determine (10) a received power (RP) of beam reception for at least a first position and a second position of a receiver (R) and to determine (11) a gradient (G) of the received power (RP) of beam reception; and
- an output module (23) configured to provide (12) the determined gradient (G) as a feedback signal to the beamforming base station (BS).

6. A vehicle (40) equipped with a receiver (R), **characterized in that** the vehicle (40) comprises an apparatus (20) according to claim 5 or is configured to perform a method according to any of claims 1 to 3 for providing a beam reception feedback signal to a beamforming base station (BS).

7. A method for adapting operating parameters (OP) of a beamforming base station (BS), the method comprising:
- receiving (13) a feedback signal comprising a gradient (G) of a received power (RP) of beam reception from a receiver (R);
- determining (14) a position of the receiver (R) relative to the beam (B) from the gradient (G); and
- adapting (15) at least one operating parameter (OP) of the beamforming base station (BS) based on the position of the receiver (R).

8. The method according to claim 7, wherein the at least one operating parameter (OP) is a beam update rate or a beam steering parameter.

9. The method according to claim 8, wherein the beam update rate is increased when the gradient (G) indicates a decrease of the received power (RP).

10. The method according to any of claims 7 to 9, wherein the beamforming base station (BS) is configured to use MIMO or massive-MIMO technology.

11. A computer program comprising instructions, which, when executed by a computer, cause the computer to perform a method according to any of claims 7 to 10 for adapting operating parameters (OP) of a beamforming base station (BS).

12. An apparatus (50) for adapting operating parameters (OP) of a beamforming base station (BS), the apparatus (50) comprising:
- a receiving module (52) configured to receive (13) a feedback signal comprising a gradient (G) of a received power (RP) of beam reception from a receiver (R); and
- a processing module (53) configured to determine (14) a position of the receiver (R) relative to the beam (B) from the gradient (G) and to adapt (15) at least one operating parameter (OP) of the beamforming base station (BS) based on the position of the receiver (R).

13. A beamforming base station (BS), **characterized in that** the beamforming base station (BS) comprises an apparatus (50) according to claim 12 or is configured to perform a method according to any of claims 7 to 10 for adapting operating parameters (OP).

14. The beamforming base station (BS) according to claim 13, wherein the beamforming base station (BS) has access to map data or information on streets or buildings in a coverage area (CA) of the beamforming base station (BS).
